Europäisches Patentamt

European Patent Office

Office européen des brevets

(11) Publication number: **0 087 902**
**B1**

# EUROPEAN PATENT SPECIFICATION

(45) Date of publication of patent specification: **05.11.86**

(51) Int. Cl.⁴: **B 62 D 53/08**

(21) Application number: **83300889.9**

(22) Date of filing: **21.02.83**

(54) Fifth wheel hitch.

(30) Priority: **01.03.82 US 353038**

(43) Date of publication of application:
**07.09.83 Bulletin 83/36**

(45) Publication of the grant of the patent:
**05.11.86 Bulletin 86/45**

(84) Designated Contracting States:
**BE DE FR GB IT LU NL SE**

(56) References cited:
**US-A-2 077 484**
**US-A-2 166 308**
**US-A-2 663 575**
**US-A-2 982 566**
**US-A-3 013 815**
**US-A-3 485 513**
**US-A-3 640 549**
**US-A-4 106 793**

(73) Proprietor: **HOLLAND HITCH COMPANY**
**430 West 18th Street**
**Holland Michigan (US)**

(72) Inventor: **Martin, Samuel Albert**
**4596 Audubon**
**Holland Michigan (US)**
Inventor: **Bakker, Frederick Jay**
**6741 - 152nd Street**
**West Olive Michigan (US)**

(74) Representative: **Robinson, Anthony John**
**Metcalf et al**
**Kilburn & Strode 30 John Street**
**London, WC1N 2DD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to fifth wheel hitches and in particular to the kingpin locking mechanisms thereof.

Kingpin locking mechanisms for fifth wheel assemblies, such as those described in U.S. Patents 2,663,575; 2,982,566; 3,013,815; 3,640,549 and 4,106,793 are generally known in the art. More specifically, US—A—2 982 566 describes a fifth wheel plate with an upper bearing surface and a kingpin slot therethrough, and a pair of pivotally mounted jaws which are closed to define a socket which has a generally vertically oriented central axis and in which a kingpin is retained in a locked position, and are opened to release the kingpin in an unlocked position; and means for adjusting the angular position of the jaws in the closed, locked position for varying the side-to-side dimension of the socket to compensate for side wear in the hitch.

Although prior adjustable locking mechanisms have proved satisfactory in compensating for side-to-side wear in the hitch, they have been less than fully effective in compensating for fore-to-aft wear in the hitch. This results from the fact that as the left-hand and right-hand jaws are pivotally adjusted inwardly at the rearward ends to close more tightly about the kingpin, the fore-to-aft dimension of the socket does not vary substantially. However, a great majority of the wear which occurs in the socket is in the fore-to-aft direction.

There is described in US—A—2 166 308 a fifth wheel hitch in which there is secured beneath the support plate adjacent the closed end of the kingpin slot a bearing plate having a rearwardly facing semi-circular opening to engage the kingpin, the edge of the bearing plate defining the semi-circular opening entering a groove in the kingpin. The bearing plate can be replaced when it is worn. Because of the small surface area of the zone of engagement between the edge of the bearing plate and the kingpin, such replacement will be required relatively frequently.

According to the present invention, problems produced by wear in the fore-and-aft direction are substantially reduced by providing, in a fifth wheel hitch having means for varying the side-to-side dimension of the socket, a stationary bearing having an arcuate bearing surface which mates with the kingpin and forms at least a portion of the forward half of the socket, the bearing being fixed during hitch loading with respect to the central axis of the socket, whereby pivotal adjustment of the jaws varies the fore-to-aft dimension of the socket to compensate for end wear in the hitch, and the stationary bearing extending upwardly through the kingpin slot to an elevation slightly below the upper bearing surface of the support plate.

The invention thus provides an adjustable locking mechanism for a fifth wheel hitch which is capable of compensating for both side-to-side and fore-to-aft wear. This is achieved in a way which permits a very uncomplicated construction which is economical to manufacture, and very reliable. The invention thus uses the side-to-side adjustment of US—A—2 982 566 to produce additionally fore-to-aft adjustment to compensate for wear, this wear being substantially less than that occurring with the hitch of US—A—2 166 308 because the stationary bearing, instead of being located only beneath the support plate and engaging the kingpin only by a narrow edge, extends upwardly through the kingpin slot and is thus able to present a much larger surface to the kingpin. The adjustable locking mechanism is efficient in use, capable of a long operating life, and particularly well adapted for the proposed use.

The invention may be carried into practice in various ways but one fifth wheel assembly with an adjustable hitch embodying the invention will now be described by way of example with reference to the accompanying drawings, in which:

Figure 1 is a top plan view of the fifth wheel assembly and adjustable hitch;

Figure 2 is a bottom plan view of the fifth wheel assembly and hitch;

Figure 3 is a fragmentary horizontal cross-sectional view of the fifth wheel assembly, particularly showing the hitch in a closed, locked position;

Figure 4 is a fragmentary vertical cross-sectional view of the hitch, taken along the line IV—IV of Figure 3;

Figure 5 is a top plan view of a pair of jaw portions of the hitch;

Figure 6 is a side elevational view of the jaw;

Figure 7 is a top plan view of a stationary bearing portion of the hitch;

Figure 8 is a side elevational view of the stationary bearing;

Figure 9 is a fragmentary horizontal, cross-sectional view of the fifth wheel assembly, with the hitch shown in a closed, locked position about a kingpin;

Figure 10 is a fragmentary vertical cross-sectional view of the fifth wheel assembly, taken along the line X—X of Figure 9;

Figure 11 is a fragmentary horizontal, cross-sectional view of the fifth wheel assembly, with the hitch shown in an inwardly adjusted position; and

Figure 12 is a fragmentary, horizontal, cross-sectional view of the inwardly adjusted hitch shown in Figure 11 with a kingpin positioned therein.

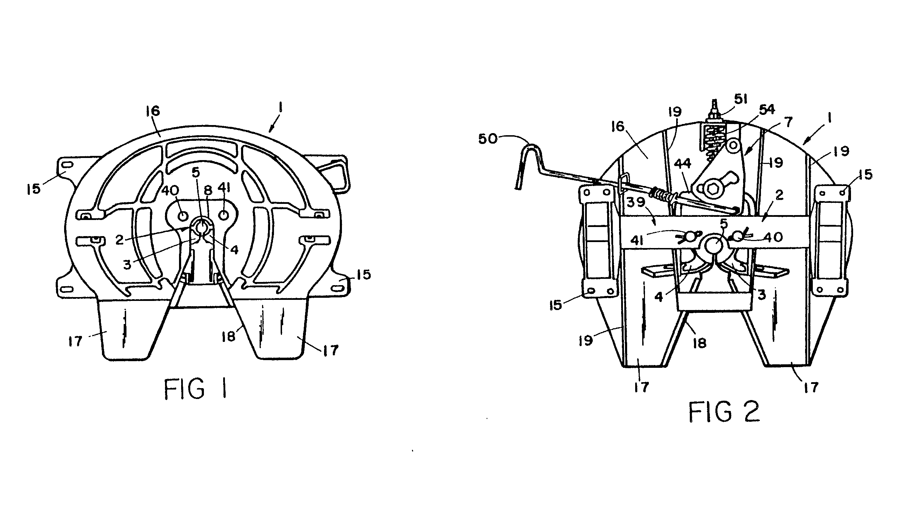

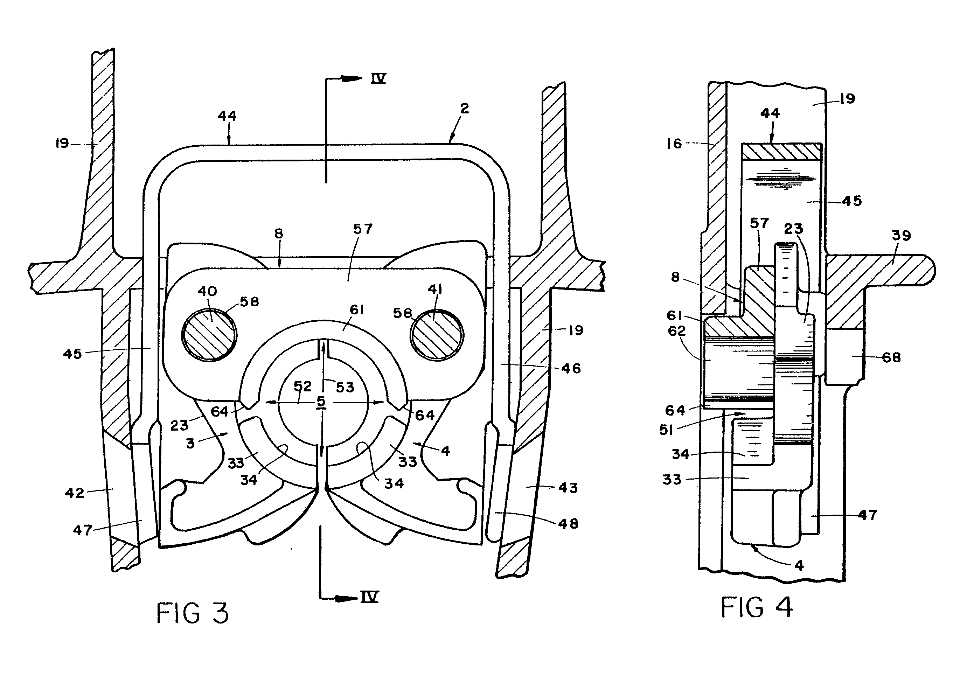

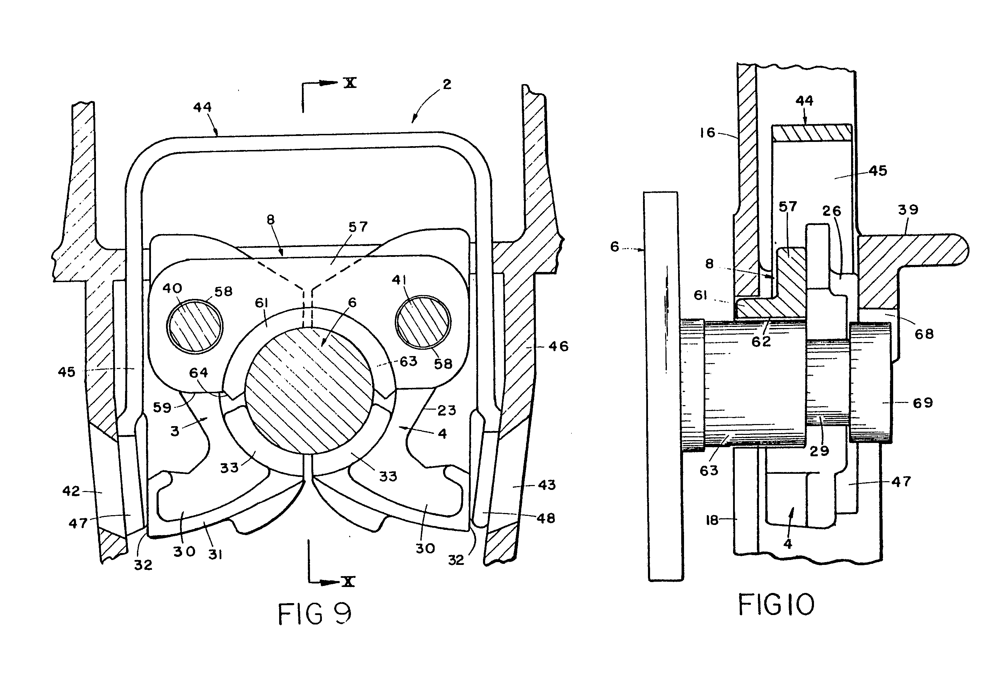

The drawings show a fifth wheel assembly 1 having an adjustable hitch 2 which comprises a kingpin locking mechanism having a pair of pivoting locking jaws 3 and 4 which form a socket 5 in which a kingpin 6 (Figures 9 and 10) is retained. An adjustment device 7 (Figure 2) varies the angular position of the closed jaws 3 and 4 to vary the side-to-side dimension of the socket 5, and thereby compensate for side wear in the hitch 2. A stationary, semicircular bearing 8 (Figures 3 and 4) is fixedly mounted in the hitch 2 to form a portion of the forward half of the socket 5, such that pivotal adjustment of the closed jaws 3 and 4 also varies the fore-to-aft dimension of socket 5, and thereby compensate for end wear in the hitch 2.

· The fifth wheel assembly 1 in which the hitch is connected is a conventional structure, and comprises a trunnion bracket 15 which pivotally connects a fifth wheel plate 16 to the frame of a vehicle (not shown). The fifth wheel plate 16 includes a pair of downwardly inclined tongues 17, and a tapered slot 18 which guides the kingpin 6 into the hitch 2. A plurality of depending ribs 19 are integrally formed on the lower surface of the fifth wheel plate 16, and form a structure in which the hitch 2 is housed, as described in greater detail hereinafter.

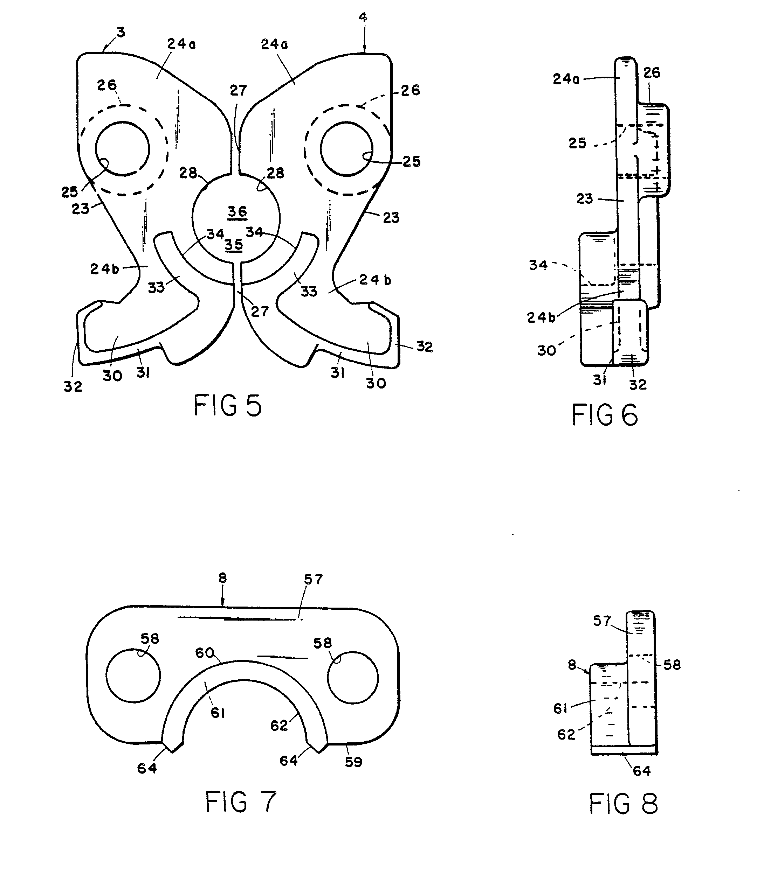

The locking jaws 3 and 4 are positioned on the left- and right-hand sides of the fifth wheel slot 18, as viewed in top plan. Jaws 3 and 4 have a substantially identical construction, except that they are shaped for assembly in the left- and right-hand sides of the hitch 2. Each of the jaws 3 and 4 has a plate-shaped body 23 (Figures 5 and 6), with a generally flat upper, forward portion 24a with an aperture 25 extending therethrough. An integrally formed boss 26 depends from the lower surface of body 2 about aperture 26. The inwardly disposed side edges 27 of jaws 3 and 4 include semicircular cutouts 28 which form left- and right-hand portions of kingpin socket 5, and are adapted to mate with the smaller diameter portion or neck 29 of kingpin 6. The rearward portion 24b of each jaw body 23 includes laterally extending ears 30, having a web 31 along the exterior sides thereof that forms a flat abutment surface 32 which mates with the adjustment device 7, as described in greater detail hereinafter. Integrally formed rims 33 extend upwardly from the upper surfaces of the jaw bodies 23, and define a pair of arcuately shaped bearing surfaces 34 that are concentric with, and form a rearward half 35 of kingpin socket 5.

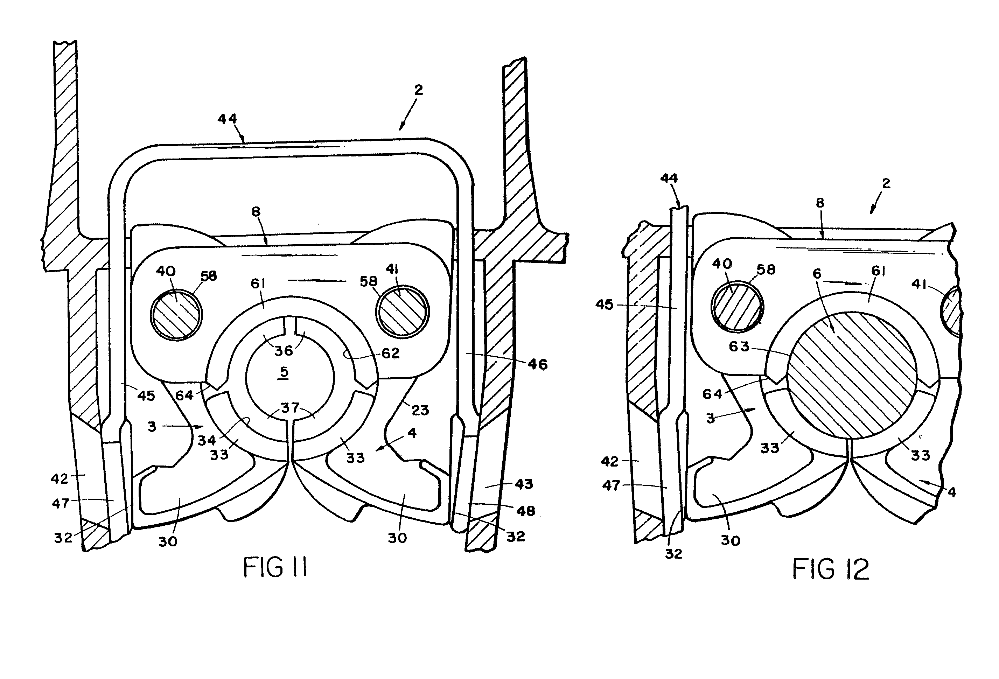

With reference to Figures 3 and 4, locking jaws 3 and 4 are pivotally mounted in the fifth wheel assembly on pins 40, 41 which extend through the jaw apertures 25. In this example, the pins 40 and 41 have their upper ends mounted in the fifth wheel plate 16, and their lower ends mounted in an interior cross brace 39 connected with the lower edges of ribs 19. Apertures or windows 42 and 43 are formed in plate ribs 19, such that in the unlocked hitch position, the ears 30 of jaws 3 and 4 are pivoted through the windows 42 and 43. A U-shaped yoke 44 is slidingly mounted between the tapered plate ribs 19, and includes a pair of generally parallel legs 45 and 46 with wedge-shaped ends 47 and 48 respectively that engage the abutment surfaces 32 on jaw ears 30 to retain the jaws in a selected, closed position. A conventional adustment device, such as the mechanism 7 illustrated in Figure 2, is connected with yoke 44, and moves the same forwardly and rearwardly to lock and unlock jaws, and also adjusts the closed position of the jaws to ensure close mating contact with kingpin 6. In the illustrated structure, jaws 3 and 4 are released from the locked position by manipulating a handle 50, which withdraws the yoke 47 from its position obstructing the windows 42, 43. Jaws 3 and 4 can then be pivoted into a fully open position to remove the kingpin 6 from the socket 5. When jaws 2 and 3 are closed and locked, an adjustment nut 51 can be manipulated to vary the tension in a coil spring 54, which shifts the yoke 44 slightly in the fore-to-aft direction (in the orientation illustrated in Figures 3 and 9) to adjust for wear in the hitch 2. The socket 5 is tightened about the kingpin 6 by resiliently urging and moving the yoke 44 rearwardly (toward the socket 5) so that the rearward portions 24b of jaws 3 and 4 converge as illustrated in Figures 11 and 12. This adjustment is effective in varying the side-to-side dimension of the socket, which is illustrated by arrow 52 in Figure 3. However, in prior adjustable hitches, the fore-to-aft dimension of socket 5, which is illustrated by arrow 53 in Figure 3, is not varied substantially during this adjustment process. Hence, prior hitch arrangements have been very limited in their ability to take up wear in the fore-to-aft direction.

In the construction described, the bearing 8 is stationary in the closed, locked jaw position, with respect to the central axis of the socket 5, such that pivotal adjustment of the jaws 3 and 4 also varies the fore-to-aft dimension 53 of the socket 5 to compensate for end wear in the hitch 2. Bearing 8 has a plate-shaped body 57 with a pair of apertures 58 extending therethrough. The rearward edge 59 of the bearing body 57 includes an arcuate cutout 60, with a similarly shaped, integral rim 61 upstanding therefrom. In this example, the bearing 8 is forged. The rim 61 provides an arcuate bearing surface 62 which is adapted to engage the larger diameter portion or shoulder 63 of the kingpin 6. Preferably, the bearing surface 62 has a generally semicircular plan shape (180°), and extends continuously about the cutout 60 to define a solid bearing surface. The end edges 64 of the rim 61 are tapered, and have a generally V-shape in plan view to facilitate guiding the kingpin 6 into the socket 5 without hitting the end edges of the bearing 8.

In the illustrated example, the bearing 8 is positioned above the locking jaws 3 and 4, and is mounted on the pins 40 and 41. The pins 40 and 41 extend through bearing apertures 58, and thereby fixedly mount the bearing 8 in the hitch. However, it is to be understood that other suitable mounting arrangements such as welding of the bearing 8 to the ribs 19, or the like, may be used to fixedly or adjustably mount the bearing 8 in the hitch 2, as described in greater detail hereinafter. The rim portion 61 of the bearing 8 extends through the arcuate end of the plate slot 18 to a height slightly below the uppermost surface of the fifth wheel plate 16, thereby providing increased bearing surface area. The upper end of the bearing rim 61 is thus positioned within the confines of the fifth wheel plate 16. Since the bearing 8 is not connected with the pivoting jaws 3 and 4, but is stationary, the upstanding rim portion 61 of the bearing 8 does not interfere with movement of the jaws 3 and 4. When assembled, the bearing 8 forms a portion of the forward half 36 of the kingpin socket 5. As best illustrated in Figures 9 and 10, the forward half 36 of the socket 5 is defined by bearing 8, and the forward quadrants (i.e., 90°) of the cutout edges 28 of the jaws 3 and 4. The rearward half 35 of socket 5 is defined by the two bearing surfaces 34, and the rearward quadrants (i.e., 90°) of the cutout edges 28 of the jaws 3 and 4. The cross brace 39 on the bottom of the hitch 2 includes an arcuate cutout 68 to provide clearance for the lower end 69 of the kingpin 6. The cutout edge 68 of the cross brace 39 does not contact the kingpin end 69, and does not form a part of the socket 5.

As will be apparent, the bearing 8 is designed to be fixed in the hitch 2 when the socket 5 is closed and locked. However, the present invention also contemplates means for adjusting the fore-to-aft position of the bearing 8 in cases of extreme wear. Such means may include shims (not shown) positioned in the forward half of apertures 58. Also, the bearing 8 could be mounted on threaded studs or the like (not shown) which when rotated would adjust the fore-to-aft position of the bearing 8 with respect to the central axis of socket 5.

In operation, the kingpin socket 5 is adjusted to take up wear by shifting the yoke 44 rearwardly. Because the bearing 8 is fixed with respect to the central axis of the socket 5, as the rearward ends 24b of the locking jaws 3 and 4 are converged, the fore-to-aft dimension 53 of socket 5 is decreased to take up end wear in the hitch. Hence, pivotal adjustment of the jaws 3 and 4 not only compensates for side wear in the hitch, but also simultaneously and automatically compensates for end wear in the hitch.

## Claims

1. A fifth wheel hitch having a support plate (16) with an upper bearing surface and a kingpin slot (18) therethrough, and a pair of pivotally mounted jaws (3, 4) which are closed to define a socket (5) which has a generally vertically oriented central axis and in which a kingpin (6) is retained in a locked position, and are opened to release the kingpin in an unlocked position; and means (44—48) for adjusting the angular position of the jaws in the closed, locked position for varying the side-to-side dimension of the socket to compensate for side wear in the hitch, characterised by a stationary bearing (8) having an arcuate bearing surface (62) which mates with the kingpin (6) and forms at least a portion of the forward half of the socket (5), the bearing being fixed during hitch loading with respect to the central axis of the socket, whereby pivotal adjustment of the jaws (3, 4) varies the fore-to-aft dimension of the socket to compensate for end wear in the hitch, and the stationary bearing (8) extending upwardly through the kingpin slot (18) to an elevation slightly below the upper bearing surface of the support plate (16).

2. A fifth wheel hitch according to Claim 1 in which the bearing surface (62) is substantially semi-circular.

3. A fifth wheel hitch according to Claim 2 in which the bearing surface extends continuously about the forward half of the socket.

4. A fifth wheel hitch according to any of Claims 1 to 3 in which the bearing (8) is positioned above the jaws (3, 4).

5. A fifth wheel hitch according to any of Claims 1 to 4 in which the jaws (3, 4) are pivotally mounted on a pair of laterally spaced apart pins (40, 41) and the bearing (8) is fixedly mounted on the pins.

6. A fifth wheel hitch according to any of Claims 1 to 5 in which the bearing (8) comprises a flat plate (57) having a semicircular opening through a rearward edge (59) thereof, with a part sleeve (61) upstanding from the flat plate.

7. A fifth wheel hitch according to Claim 6 in which the part sleeve (61) has wedge-shaped end edges (64).

## Patentansprüche

1. Zugsattelkupplung mit einer eine obere Lagerfläche und einen hindurch verlaufenden Schlitz (18) für einen Zugsattelzapfen enthaltenden Trageplatte (16) und einem Paar von schwenkbar angebrachten Backen (3, 4), die in geschlossenem Zustand eine Aufnahme (5) mit einer im wesentlichen vertikal orientierten Mittelachse bilden und einen Zugsattelzapfen (6) in einer verriegelten Position halten, und in geöffnetem Zustand den Zugsattelzapfen in eine unverriegelte Position freigeben; sowie mit einer Einrichtung (44—48) zur Regulierung der Winkeleinstellung der Backen im geschlossenen, verriegelten Zustand, so daß die seitliche Ausdehnung der Aufnahme verändert werden kann, um Seitenspiel in der Kupplung auszugleichen, gekennzeichnet durch ein feststehendes Lagerelement (8) mit einer bogenförmigen Lagerfläche (62), die mit dem Zugsattelzapfen (6) zusammenpaßt und mindestens einen Teil der vorderen Hälfte der Aufnahme (5) bildet, welches während des Aufsattelns gegenüber der Mittelachse der Aufnahme fixiert ist, wobei die Schwenkregulierung der Backen (3, 4) sich mit der Längsausdehnung der Aufnahme verändert, um das Endspiel in der Kupplung auszugleichen und das feststehende Lagerelement (8) sich nach oben durch den Schlitz für den Zugsattelzapfen hindurch erstreckt bis zu einer geringfügig unter der oberen Lagerfläche der Trageplatte (18) liegenden Höhe.

2. Zugsattelkupplung nach Anspruch 1, dadurch gekennzeichnet, daß die Lagerfläche (62) im wesentlichen halbkreisförmig ist.

3. Zugsattelkupplung nach Anspruch 2, dadurch gekennzeichnet, daß sich die Lagerfläche (62) kontinuierlich um die vordere Hälfte der Aufnahme (5) erstreckt.

4. Zugsattelkupplung nach Anspruch 1, 2 oder 3, dadurch gekennzeichnet, daß sich das Lagerelement (8) oberhalb der Backen (3, 4) befindet.

5. Zugsattelkupplung nach einem der Ansprüche 1 bis 4, dadurch gekennzeichnet, daß die Backen (3, 4) um ein Paar von seitlich beabstandeten Bolzen (40, 41) schwenkbar angebracht sind und das Lagerelement (8) an den Bolzen fest angebracht ist.

6. Zugsattelkupplung nach einem der Ansprüche 1 bis 5, dadurch gekennzeichnet, daß das Lagerelement (8) eine ebene Platte (57) mit einem durch eine rückwärtige Kante (59) derselben verlaufenden Ausschnitt und einer von der ebenen Platte emporragenden Teilbuchse (61) enthält.

7. Zugsattelkupplung nach Anspruch 6, dadurch gekennzeichnet, daß die Teilbuchse (61) keilförmige Endkanten (64) hat.

**Revendications**

1. Attelage à sellette présentant un plateau support (16) avec une surface supérieure formant portée et une fente traversante pour le pivot d'attelage (18) et un paire de mors (3, 4) qui sont montés avec possibilité de pivotement, que l'on ferme pour définir un logement (5), qui a un axe central d'orientation générale verticale et dans lequel un pivot d'attelage (6) est maintenu en position verrouillée, et que l'on ouvre pour libérer le pivot d'attelage en position déverrouillée, et présentant aussi des moyens (44—48) pour ajuster la position angulaire des mors dans la position fermé, verrouillée, de façon à faire varier la dimension de côté à côté du logement pour compenser l'usure de côté dans l'attelage, caractérisé en ce qu'il comporte un palier fixe (8) qui présente une surface de portée en arc (32) qui s'accouple avec le pivot d'attelage (6) et forme au moins une portion de la moitié avant du logement (5), le palier étant fixe par rapport à l'axe central du logement au cours de la mise sous constrainte de l'attelage, de sorte que l'ajustement des mors (3, 4) par pivotement fait varier la dimension d'avant en arrière du logement pour compenser l'usure en bout de l'attelage, et en ce que le palier fixe (8) s'étend vers le haut, à travers la fente pour le pivot d'attelage (8), jusqu'à un niveau qui vient légèrement en-dessous de la surface supérieure de portée du plateau support (16).

2. Attelage à sellette selon la revendication 1 dans lequel la surface de portée du palier (62) est semi-circulaire.

3. Attelage à sellette selon la revendication 2, dans lequel la surface de portée du palier s'étend de façon continue autour de la moitié avant du logement.

4. Attelage à sellette selon l'une quelconque des revendications 1 à 3, dans lequel le palier (8) est placé au-dessus des mors (3, 4).

5. Attelage à sellette selon l'une quelconque des revendications 1 à 4, dans lequel les mors (3, 4) sont montés, pivotants, sur une paire de broches (40, 41) espacées latéralement l'une de l'autre, et en ce que le palier (8) est monté, fixe, sur les broches.

6. Attelage à sellette selon l'une quelconque des revendications 1 à 5, dans lequel le palier (8) comporte un plateau plat (57) qui présente dans son bord arrière (59) une ouverture semi-circulaire avec une douille partielle (61) qui s'élève à partir du plateau plat.

7. Attelage à sellette selon la revendication 6, dans lequel la douille partielle (61) présente des bords d'extrémité (64) en forme de coin.

0 087 902

FIG 2

FIG 1

FIG 3

FIG 4

0 087 902

0 087 902

FIG 5

FIG 6

FIG 7

FIG 8

3

FIG 9

FIG 10

0 087 902

FIG 11

FIG 12